# EUROPÄISCHE PATENTSCHRIFT

(11) **EP 2 762 646 B1**
(45) Veröffentlichungstag und Bekanntmachung des Hinweises auf die Patenterteilung: **02.08.2017**
(21) Anmeldenummer: 14152752.3
(22) Anmeldetag: 28.01.2014
(51) Int. Cl.: E03C 1/04, E03C 1/10, E03C 1/05, F16K 11/00, F24D 17/00

(54) **Sanitäranordnung**
Sanitary assembly
Ensemble sanitaire

(30) Priorität: 30.01.2013 DE 102013001584
(43) Veröffentlichungstag der Anmeldung: 06.08.2014
(73) Patentinhaber: Franke Aquarotter GmbH, 14974 Ludwigsfelde (DE)
(72) Erfinder: Hägele, Clemens, 10247 Berlin (DE)
(74) Vertreter: Lemcke, Brommer & Partner Patentanwälte Partnerschaft mbB

(56) Entgegenhaltungen:
- DE-A1-102007 026 849
- DE-A1-102009 030 534
- JP-A- H08 270 028
- KR-A- 20120 063 884

## Beschreibung

Die Erfindung betrifft eine Sanitäranordnung gemaß dem Oberbegriff des Ansprunchs 1.

In Leitungsabschnitten, in denen über einen längeren Zeitraum Wasser steht, können sich Krankheitserreger bilden. Insbesondere kann es zur Bildung von Bakterien kommen. So sind beispielsweise als Legionellen bezeichnete Bakterien bekannt, die Lungenerkrankungen beim Menschen verursachen können, wenn sie eingeatmet werden. In Sanitäranordnungen bilden sich Krankheitserreger vorwiegend dann, wenn die Wassertemperatur zwischen 25° und 50° liegt und dieses Wasser in Leitungsabschnitten oder Armaturbereichen längere Zeit steht. Ein Großteil der Bakterien, beispielsweise auch Legionellen, wird bei einer Temperatur von mehr als 70 °C abgetötet. Zur thermischen Desinfektion ist es daher bekannt, den Warmwasserbereiter so zu erwärmen, dass das System, insbesondere die nachgeschalteten Leitungsabschnitte und die Armatur für mehr als drei Minuten auf über 70° C erwärmt wird.

In der DE 296 22 320 U1 wird eine Armatur für Waschtische beschrieben. Die Armatur ist mit einem Kaltwasseranschluss und einem Warmwasseranschluss ausgestattet. Mittels einer Misch- und/oder Absperrvorrichtung kann das Verhältnis von Warmwasser und Kaltwasser und somit die gewünschte Mischwassertemperatur eingestellt werden. Nach der Misch- und/oder Absperrvorrichtung strömt das Mischwasser zu einem Auslauf. Die Armatur weist einen Warmwasserdesinfektionsanschluss auf, der unter Umgehung der Misch- und/oder Absperrvorrichtung direkt in den Auslauf mündet. Auf diese Weise lässt sich der Warmwasserzulauf dadurch thermisch desinfizieren, dass Warmwasser von mindestens 70°C drei Minuten lang durch die Zuleitung strömt und unabhängig von der Stellung der Armatur über den Auslauf in den Abfluss befördert werden kann. Dadurch soll der Warmwasserzulauf, einschließlich das Ventil (von seiner Außenseite) und das Armaturengehäuse desinfiziert werden.

Die DE 10 2006 021 838 A1 beschreibt eine Wasserarmatur mit einer mechanischen absperrbaren Mischbatterie. Die absperrbare Mischbatterie weist eine Mischkammer mit einem ersten Zulauf, einem zweiten Zulauf und einem Ablauf auf. Dabei ist eine Umführungsverbindung vorhanden, welche einen Anschluss direkt mit dem Ablauf verbindet

Die DE 10 2009 030 534 A1 beschreibt eine Kaltwasserversorgung und eine Warmwasserversorgung, die mit einem Mischventil verbunden sind. Von dem Mischventil gelangt das Wasser über ein Ventil zu einem Wasserauslauf. Weiterhin verfügt die Vorrichtung über ein Bypassventil. Über dieses kann Warmwasser zum Wasserauslauf gelangen. Der Ausgang des Auslaufventils ist mit einem Eingang der Verbindungsstelle verbunden. An einem weiteren Eingang der Verbindungsstelle ist der Ausgang des Bypassventils angeschlossen. Die Temperatur des Wassers wird mittels des Mischventils eingestellt.

Die JP H08 27 00 28 A zeigt eine Bypassleitung und ein Ventil, die in einer Leitung eines Wasseraufbereiters angeordnet sind. Im Wasseraufbereiter befindet sich chlorhaltiges Wasser. Über die Bypassleitung kann reines Wasser zu der Leitung geführt werden, um chlorhaltiges Wasser aus der Leitung zu entfernen.

Die DE 10 2007 026 849 A1 zeigt eine Vorrichtung mit einem Gehäuse, welches eine Wassereintrittsöffnung, eine Wasseraustrittsöffnung und ein Mittel zum Reinigen des Wassers aufweist. Die Wassereintrittsöffnung und die Wasseraustrittsöffnung sind durch die Leitungen verbunden. Über eine erste Leitung ist das Wasser durch das Mittel zum Reinigen hindurchleitbar. Über die zweite Leitung ist das Wasser an dem Mittel vorbeileitbar.

Die KR 2012 0063884 A beschreibt eine Wasserabgabeeinrichtung, um Wasser auf der Außenseite abzuführen durch Umleiten des zugeführten Wassers. Wenn Wasser mit einem pulsierendem Druck über einem Grenzwert liegt, wird von einer Wasserversorgungsquelle ein Ventil geschlossen.

Das Dokument DE 10 2009 030 534 wird als nächstliegender Stand der Technick angesehen. Dieses Dokument entspricht dem Oberbegriff des Ansprunchs 1.

Aufgabe der Erfindung ist es, eine Sanitäranordnung anzugeben, bei welcher eine Armatur Wasser einer stets hohen Qualität und Reinheit abgibt und dabei insbesondere die Konzentration an Keimen und Bakterien möglichst gering ist. Dadurch sollen Kontaminationen in der Armatur selbst verhindert werden. Zudem soll sich die Sanitäranordnung möglichst durch unterschiedliche Stufen und Zeitzyklen der Reinigung auszeichnen, sodass flexible Reinigungsmöglichkeiten gegeben sind. Weiterhin soll sich die Sanitäranordnung durch eine möglichst wassersparende und energiesparende Betriebsweise auszeichnen. Dabei soll stets die Sicherheit des Benutzers gewährleistet bleiben, sodass es zu keinen Verletzungen, beispielsweise durch zu heißes Wasser, kommen kann. Weiterhin soll sich die Sanitäranordnung durch eine kompakte Bauweise auszeichnen, die einfach zu montieren, platzsparend und optisch ansprechend ist.

Diese Aufgabe wird erfindungsgemäß durch eine Anordnung mit den Merkmalen des Anspruchs 1 gelöst.

Durch Integration von mindestens einer Bypass-Absperrvorrichtung in eine Baueinheit, die außerhalb der Armatur angeordnet ist, wird eine kompakte und übersichtliche Bauweise der Sanitäranordnung geschaffen. Die Baueinheit ist ein Modul innerhalb einer Komplettlösung einer Sanitäranordnung. Dies ermöglicht einen deutlich geringeren Montageaufwand gegenüber herkömmlichen Konstruktionen.

Bei der Erfindung sind sowohl eine Bypass-Absperrvorrichtung für eine thermische Desinfektionsspülung mit Heißwasser als auch eine Bypass-Absperrvorrichtung für eine Hygienespülung mit Kaltwasser in ein Bauteil integriert., wobei diese Baueinheit außerhalb der Armatur Steht.

Mit der erfindungsgemäßen Anordnung ist es somit möglich, ausschließlich heißes Wasser zur thermischen Desinfektion durch den Bypass zu leiten und nicht nur Mischwasser. Je nach Anwendungsfall kann auch nur kaltes Wasser zur Hygienespülung eingesetzt werden. Es ist aber bei Bedarf auch möglich, eine Mischung aus kaltem und heißem Wasser zur Spülung einzusetzen.

Bei einer vorteilhaften Variante der Erfindung sind ergänzend hierzu eine Bypass-Abzweigung vom Kaltwasserzulauf und eine Bypass-Abzweigung vom Warmwasserzulauf in die Baueinheit integriert. Dadurch wird ein Leitungsgewirr vermieden, sodass neben einer kompakten und übersichtlichen Bauweise die Sanitäranordnung in ihrer Gesamtheit optisch ansprechend wirkt.

Besonders vorteilhaft in diesem Zusammenhang ist es, wenn die Verbindung zwischen Bypass-Absperrvorrichtung und Armatur über eine direkte, insbesondere im Wesentlichen unnachgiebige, starre Verrohrung erfolgt, die insbesondere aus dem zumindest abschnittsweise aus Rohrmaterial bestehenden Bypassanschluss besteht. Dadurch wird vermieden, dass die zusätzliche außerhalb der Armatur positionierte die zumindest eine Bypass-Absperrvorrichtung aufweisende Baueinheit über zusätzliche Schlauchleitungen an die Armatur angeschlossen werden muss, was ansonsten zu einer erheblichen Vergrößerung des Aufwands bei der Montage der Armatur führen würde.

Dies lässt sich in geeigneter Weise dazu ausnutzen, dass man der Verrohrung statische Aufgaben überträgt, sie beispielsweise dazu dient, die Baueinheit über die Verrohrung an der montierten Armatur festzulegen, ohne dass die Baueinheit selbst eine zusätzliche bzw. separate Festlegung erfordert.

Des Weiteren lassen sich durch die direkte Verrohrung die Wasserwege zwischen Bypass-Absperrvorrichtung und Armatur auf ein Mindestmaß verkürzen und somit das Wasservolumen in diesem Bereich entsprechend reduzieren.

Vorzugsweise weist die Baueinheit ein Gehäuseteil auf, in dem mindestens eine Bypass-Absperrvorrichtung und/oder mindestens eine Abzweigung angeordnet sind. Als besonders günstig erweist es sich dabei, wenn ein einstückiges Gehäuseteil eingesetzt wird. Das Gehäuseteil kann aus einem Kunststoff oder einem Metall, beispielsweise aus einem Guss- oder Pressteil bestehen.

Bei einer Variante der Erfindung sind in dem Gehäuseteil Aussparungen eingebracht, in welche mindestens eine Bypass-Absperrvorrichtung platziert ist. Vorzugsweise sind die Aussparungen mit einem Innengewinde versehen. Die Bypass-Absperrvorrichtungen ihrerseits weisen vorzugsweise ein Außengewinde auf und werden in das jeweilige Innengewinde eingeschraubt. Daneben sind auch andere Verbindungsarten wie zum Beispiel Klemm- oder Steckverbindungen in vorteilhafter Weise verwendbar.

Bei einer bevorzugten Variante der Erfindung sind in dem Gehäuseteil der Baueinheit Kanäle eingebracht. Die Kanäle können unterschiedliche Querschnitte haben, wobei sich insbesondere Kanäle mit runden Querschnitten eignen.

Die Baueinheit verfügt vorzugsweise über einen Kaltwasserzulaufanschluss und/oder einen Warmwasserzulaufanschluss. Innerhalb des Gehäuseteils der Baueinheit zweigt von einem Kaltwasserzulaufkanal und/oder einem Warmwasserzulaufkanal jeweils ein Bypasskanal ab. Jeder Bypasskanal führt zu einer Bypass-Absperrvorrichtung. Durch Öffnen der entsprechenden Bypass-Absperrvorrichtung wird der jeweilige Bypasskanal durchströmt.

Nach jeder Bypass-Absperrvorrichtung ist jeweils ein weiterer Kanal in dem Gehäuseteil angeordnet. Die beiden Kanäle führen zu einem gemeinsamen Austritt der Baueinheit. An dem Austritt ist eine Spüleinleitung angeordnet, welche zu dem Bypassanschluss der Armatur führt.

Bei der Baueinheit handelt es sich um ein von der Armatur separates Bauteil, das ein eigenständiges Modul bildet. Vorzugsweise ist bei dem modularen Aufbau der Sanitäranordnung die Baueinheit unterhalb der Armatur angeordnet. Dabei eignet sich eine Anordnung der Baueinheit insbesondere innerhalb eines Waschtisches. Zwischen der Baueinheit und der Armatur sind Verbindungselemente wie beispielsweise Gewindestangen, Schnellspannvorrichtungen o.ä. angeordnet. Die Armatur ist vorzugsweise oben auf dem Waschtisch als Standbatterie positioniert. Sie kann über diese Verbindungselemente mit der Baueinheit verspannt werden. Die Erfindung verringert den Montageaufwand, keine Schläuche zwischen Baueinheit und Armatur notwendig sind.

Bei dem modularen Aufbau der Sanitäranordnung kann die Baueinheit aber auch neben oder hinter der Armatur angeordnet sein, z.B. dann wenn die Sanitäranordnung bei einer Reihenwaschanlage eingesetzt wird, bei welcher die Leitungen etwa auf Höhe der Armaturen auf deren Rückseite in Horizontalrichtung verlaufen und benachbarte Armaturen und somit benachbarte Waschplätze miteinander verbinden. In der Regel werden diese Leitungen durch haubenartige Kanäle kaschiert, die somit eine Art Gehäuse bilden, das in geeigneter Weise auch dazu verwendet werden kann, die erfindungsgemäße Baueinheit aufzunehmen und in der Nähe zur Armatur zu positionieren.

Bei einer bevorzugten Ausführung der Erfindung ist in einem Kaltwasserzulauf der Sanitäranordnung eine Abzweigung angeordnet ist, die mit dem Bypassanschluss der Armatur in Verbindung steht zur Freigabe einer Spülung mittels einer Bypass-Absperrvorrichtung. Bei einer weiteren bevorzugten Ausführung der Erfindung ist alternativ oder insbesondere zusätzlich in einem Warmwasserzulauf der Sanitäranordnung eine Abzweigung angeordnet ist, die mit dem Bypassanschluss der Armatur in Verbindung steht zur Freigabe einer Spülung mittels einer Bypass-Absperrvorrichtung.

Diese Varianten der Erfindung ermöglichen eine Reinigung der Armatur und des Leitungsstranges mit Kalt- und/oder mit Warmwasser. Die erfindungsgemäße Vorrichtung ermöglicht es, bei geschlossener Armatur eine Reinigung des Mischwasserbereichs der Armatur, insbesondere zwischen Mischkammer und Auslauf (Perlator) und damit auch der Kaltwasser- und/oder der Warmwasser-Strangleitung zum Zwecke des Austauschs des Stagnationsvolumens in diesem Bereich durchzuführen. Vorzugsweise erfolgt eine solche Hygienespülung mit Kaltwasser und/oder mit Warmwasser regelmäßig, z.B. mindestens einmal innerhalb von 24 Stunden; je nach Vorschriften und Bedarf sind aber natürlich auch andere Zyklen wie z.B. alles 8 oder 72 Stunden möglich und beim vorliegenden Erfindungsgegenstand umsetzbar. Dabei erweist es sich als besonders günstig, wenn diese Hygienespülung so lange durchgeführt wird, bis das Stagnationsleitungsvolumen ausgetauscht ist, wodurch in der Regel mehr als 0,5 Liter Wasser und weniger als 4 Liter und insbesondere mehr als 1 Liter und weniger als 3 Liter Wasser für eine Spülung verbraucht werden.

Nach der Abzweigung vom Kaltwasser- und/oder vom Warmwasserzulauf ist eine Bypass-Absperrvorrichtung vorhanden. Vorzugsweise handelt es sich um ein Magnetventil. Durch Öffnung des Magnetventils kann der Kaltwasser- und/oder Warmwasserfluss durch die Armatur freigegeben werden. Die geschieht unter Umgehung der Misch- und/oder Absperrvorrichtung. Somit ist es möglich, auch bei geschlossener Armatur einen Spülvorgang der Armatur durchzuführen.

Vorzugsweise wird der gesamte Mischwasserbereich der Armatur gespült. Dabei erweist es sich als günstig, wenn der Bypassanschluss in eine Mischkammer der Armatur mündet. Beim Öffnen der Bypass-Absperrvorrichtung der Kaltwasser-und/oder der Warmwasser-Bypassleitung werden die Mischkammer und der gesamte Auslauf gespült, sodass sich in diesem Bereich keine Keime oder Bakterien bilden können bzw. sonstige Verschmutzungen wie beispielsweise Beläge oder Ablagerungen über den Auslauf ausgespült werden.

Das in der Warmwasserleitung vorhandene Warmwasser hat eine Temperatur von normalerweise größer 55 °C, wozu die Vorlauftemperatur in der Regel 60 °C beträgt. Wird hingegen das Warmwasser noch höher aufgeheizt, so kann dieses Heißwasser dazu verwendet werden, eine thermische Desinfektionsspülung durchzuführen. Dazu muss das Warmwasser so stark erwärmt werden, dass es in der Lage ist, das System, insbesondere die nachgeschalteten Leitungsabschnitte und die Armatur, für mehr als drei Minuten auf über 70° C zu erwärmen. Um diese hohe Temperatur des Warmwassers zu erreichen und aufrechtzuerhalten, sollte gleichzeitig der Kaltwasserzulauf in die Bypassleitung geschlossen sein.

Eine besonders günstige Ausführung der Erfindung weist eine Kombination von Kaltwasser- und Warmwasserspülung auf. Durch diese erfindungsgemäße Kombination einer Hygienespülung mit Kaltwasser und einer Hygienespülung mit Warmwasser lassen sich tatsächlich alle Leitungs- und Armaturenbereiche, die durch Stagnationswasser verunreinigt werden könnten, einer Hygienespülung unterziehen.

Vorteilhafterweise kann man einen ggf. an sich nur zur Hygienespülung vorgesehenen Warmwasser-Bypass dazu verwenden, bei einem Aufheizen des Warmwassers auf über 70 °C auch zusätzlich eine thermische Desinfektionsspülung durchzuführen. Üblicherweise erfolgt die thermische Desinfektionsspülung nur bei Überschreiten eines vorgegebenen Grenzwertes, das heißt die Desinfektionsspülung stellt in der Regel keine Routinemaßnahme dar, sondern vielmehr eine Maßnahme zur Behandlung eines verunreinigten Wasserleitungssystems. Egal ob im Falle einer bedarfsorientierten oder einer zyklischen Desinfektionsspülung hat es sich als günstig erwiesen, wenn die Spülung solange durchgeführt wird, bis das gesamte System einschließlich der Armatur ca. drei Minuten lang einer Wassertemperatur von zumindest 70 °C ausgesetzt ist. Dazu muss das Warmwasser auf über 70 °C aufgeheizt werden.

Nach der Abzweigung des Warmwasserzulaufs ist zur Freigabe der Warmwasserspülung ebenfalls eine Bypass-Absperrvorrichtung in der Warmwasser-Bypassleitung angeordnet, die aus einer mechanischen Absperrvorrichtung bestehen kann, wozu aber vorzugsweise ein Magnetventil eingesetzt wird.

Bei einer Variante der Erfindung ist an dem Bypassanschluss der Armatur eine Spülleitung angeschlossen, die mit der Abzweigung des Warmwasserzulaufs und der Abzweigung des Kaltwasserzulaufs in Verbindung steht.

Nach jeder Abzweigung ist dabei jeweils zunächst eine Bypass-Absperrvorrichtung angeordnet. Nach der jeweiligen Bypass-Absperrvorrichtung führt ein Leitungsabschnitt für Kaltwasser bzw. Warmwasser zu der Spülleitung. Somit ist nur ein einziger Bypassanschluss an der Armatur erforderlich, um eine Spülung der Armatur mit Kaltwasser bzw. Warmwasser durchzuführen. Da Armaturen kompakt gebaut sind, sind die Anschlussmöglichkeiten begrenzt, sodass diese Konstruktion erhebliche Vorteile mit sich bringt. Vorzugsweise führt der Bypassanschluss in eine Mischkammer der Armatur oder gleich in einen Abgangsbereich, der der Absperrvorrichtung nachgeschaltet ist. Die Mischkammer ihrerseits und der Abgangsbereich sind direkt mit dem Auslauf gekoppelt.

Als günstig erweist es sich, wenn die Sanitäranordnung mindestens ein Auslöseelement zur Freigabe einer Spülung aufweist. Die Spülungen werden zyklisch durchgeführt und mithilfe des Auslöseelements eingeleitet, um insbesondere bei der Desinfektionsspülung sicherzustellen, dass kein Benutzer durch das heiße Wasser verbrüht wird. Als Auslöseelement kann ein Taster, insbesondere ein Piezo-Taster, ein Schalter oder ein mechanisches Element eingesetzt werden. Auch ein Sensor kann als Auslöseelement dienen. Als Sensoren kommen beispielsweise Infrarot-, Funk- oder kapazitive Messsysteme zum Einsatz.

Vorzugsweise weist die Sanitäranordnung eine Einrichtung zur Steuerung der Spülungen auf. Mittels dieser Steuereinrichtung können die Bypass-Absperrvorrichtungen geschaltet werden. Die Bypass-Absperrvorrichtungen stehen entweder über Signalleitungen oder über drahtlose Übertragungssysteme, wie beispielsweise Funk oder Infrarot, mit der Steuerungseinrichtung in Verbindung. Prinzipiell kann die Steuereinrichtung in entsprechenden Zeitabständen, beispielsweise alle 24 Stunden bzw. einmal im Monat, die jeweilige Spülung mit Kalt-, Warm- und/oder Heißwasser auslösen.

Als besonders vorteilhaft erweist es sich, wenn die Steuerungseinrichtung mit einem Sensor in Verbindung steht. Der Sensor verhindert, dass ein Benutzer durch eine Spülung mit heißem Wasser geschädigt wird. Der Sensor erfasst die Anwesenheit eines Benutzers und verhindert, dass eine Spülung ausgelöst wird, solange ein Benutzer die Armatur benutzt. Entsprechendes lässt sich auch durch Auslösung über eine Fernbedienung gewährleisten, so dass insbesondere die Desinfektionsspülung nur dann beginnt, wenn sich der Bediener der Fernbedienung davon überzeugt hat, dass kein Benutzer die Armatur benutzt oder sich in der Nähe der Armatur aufhält und von zu heißem Wasser verletzt werden könnte.

Ergänzend oder alternativ kann die Steuereinrichtung mit einem Temperaturmessfühler in Verbindung stehen, der innerhalb der Armatur angeordnet ist. Durch Verbindung des Thermometers mit der Steuereinrichtung kann Vorsorge getroffen werden, dass die Steuereinrichtung erst dann die Dauer für die thermische Desinfektionsspülung beginnen lässt, wenn die Temperatur in der Armatur ausreichend hoch ist, beispielsweise 70°C. Erst wenn in der Armatur diese kritische Temperatur überschritten wird, beginnt die Desinfektionszeit zu laufen.

Dabei zeigen:
- Figur 1: eine schematische Schnittzeichnung eines Einhebelmischers,
- Figur 2: eine schematische Schnittzeichnung eines Selbstschlusseingriffsmischers,
- Figur 3: eine perspektivische Zeichnung der Sanitäranordnung,
- Figur 4: eine Schnittzeichnung der Sanitäranordnung,
- Figur 5: eine Schnittzeichnung von Armatur und Baueinheit der Sanitäranordnung umfassend eine Selbstschlussarmatur,
- Figur 6: einen Horizontalschnitt durch die Baueinheit,
- Figur 7: einen Vertikalschnitt der Befestigung von Baueinheit und Armatur an einem Waschtisch von vorne gesehen,
- Figur 8: einen Vertikalschnitt der Befestigung von Baueinheit und Armatur an einem Waschtisch von der Seite gesehen,
- Figur 9: eine Schnittzeichnung einer alternativen Sanitäranordnung umfassend eine Selbstschlussarmatur für eine Reihenwaschanlage und
- Figur 10: eine Schnittzeichnung einer weiteren alternativen Sanitäranordnung umfassend eine Einhebelmischarmatur für eine Reihenwaschanlage.

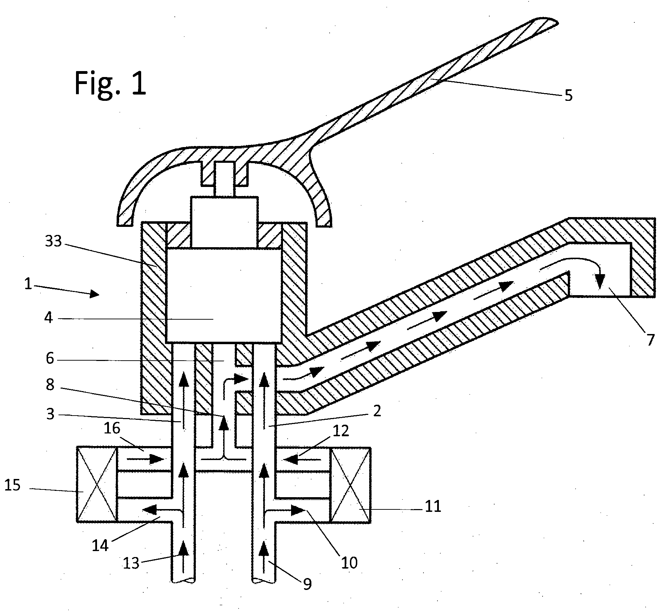

Figur 1 zeigt eine schematische Darstellung der Ausführung der Erfindung mit einem Einhebelmischer als Armatur 1. Die Armatur 1 umfasst ein Gehäuse 33, das einen Anschluss 2 für Kaltwasser und einen Anschluss 3 für Warmwasser aufweist. Über die beiden Anschlüsse 2 und 3 wird Kalt- bzw. Warmwasser zu einer Misch- und/oder Absperrvorrichtung 4 geleitet, die innerhalb der Armatur 1 angeordnet ist. Bei der Misch- und/oder Absperrvorrichtung 4 handelt es sich bei dem Ausführungsbeispiel gemäß Figur 1 um eine Mischkartusche. Mittels eines Betätigungselementes 5 kann der Wasserfluss durch die Armatur 1 reguliert werden und das Verhältnis von Warmwasser zu Kaltwasser variiert werden.

Im Ausführungsbeispiel gemäß Figur 1 handelt es sich bei dem Betätigungselement 5 um einen Einhebelhandgriff. Das Mischwasser verlässt die Misch-und/oder Absperrvorrichtung 4 und strömt in eine Mischkammer 6. Von der Mischkammer 6 strömt das Mischwasser zu einem Auslauf 7. Das Gehäuse 33 der Armatur 1 weist einen Bypassanschluss 8 auf. Über den Bypassanschluss 8 ist eine Spülung der Armatur 1 unter Umgehung der Misch- und/oder Absperrvorrichtung 4 möglich. Der Bypassanschluss 8 mündet in die der Misch-und/oder Absperrvorrichtung 4 in Strömungsrichtung nachgeschalteten Mischkammer 6. Die Mischkammer 6 ist mit dem Auslauf 7 verbunden.

Die Sanitäranordnung weist einen Kaltwasserzulauf 9 auf, in dem eine Abzweigung 10 angeordnet ist. Diese Kaltwasser-Bypass-Abzweigung 10 führt zu einer Bypass-Absperrvorrichtung 11. Bei der Bypass-Absperrvorrichtung 11 handelt es sich um ein Magnetventil. Von der Bypass-Absperrvorrichtung 11 führt eine Verbindung 12 zu dem Bypassanschluss 8. Durch Öffnung der Bypass-Absperrvorrichtung 11 wird ein Kaltwasser-Bypassstrom freigegeben, der den Mischwasserbereich der Armatur 1 spült. Diese Spülung wird als Hygienespülung bezeichnet. Die Hygienespülung erfolgt einmal innerhalb von 24 Stunden. Dabei werden ca. 1 bis 3 Liter Wasser verbraucht, wenn die Spülung 10 Sekunden lang durchgeführt wird.

Weiterhin weist die Sanitäranordnung einen Warmwasserzulauf 13 auf, in dem eine Abzweigung 14 angeordnet ist. Die Abzweigung 14 führt zu einer Bypass-Absperrvorrichtung 15, die ebenfalls als Magnetventil ausgeführt ist. Von der Bypass-Absperrvorrichtung 15 führt eine Verbindung 16 zu dem Bypassanschluss 8 der Armatur 1.

Durch Öffnen der Bypass-Absperrvorrichtung 15 kann ein Warmwasser-Bypassstrom zur Hygienespülung warm oder bei Warmwassertemperatur größer 70 °C zur thermischen Desinfektion des Mischwasserbereichs der Armatur 1 freigegeben werden. Dies wird auch als Desinfektionsspülung bezeichnet. Die Desinfektionsspülung erfolgt vorzugsweise einmal im Monat. Dabei werden ca. 10 Liter Wasser verbraucht, wenn die Spülung drei Minuten lang durchgeführt wird. Die Spülung wird bei einer Temperatur von mehr als 70°C durchgeführt.

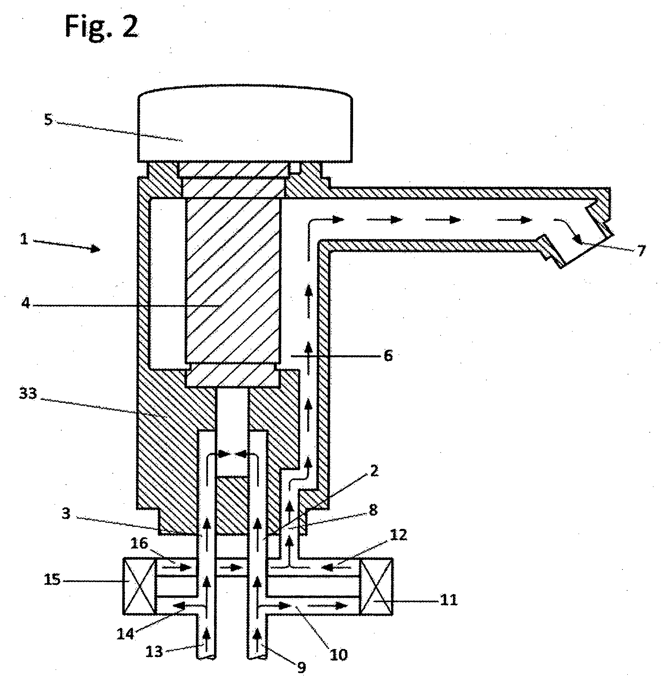

Figur 2 zeigt eine Variante der Erfindung mit einer Armatur 1, die als Selbstschlussarmatur ausgeführt ist. Bei dem Betätigungselement 5 handelt es sich um einen Drückkopf. Unter Umgehung der Misch- und/oder Absperrvorrichtung 4 kann der Mischwasserbereich der Armatur 1 über den in das Gehäuse 33 integrierten Bypassanschluss 8 gespült werden. Dabei ist wie bei der Ausführung gemäß Figur 1 sowohl eine Hygienespülung mit Kaltwasser und Warmwasser als auch eine thermische Desinfektionsspülung mit Warmwasser möglich.

Im Kaltwasserzulauf 9 ist eine Abzweigung 10 angeordnet, die zu einer Bypass-Absperrvorrichtung 11 führt. Durch Öffnung der Bypass-Absperrvorrichtung 11 kann ein Kaltwasser-Bypassstrom durch die Armatur 1 freigegeben werden.

Im Warmwasserzulauf 13 der Sanitärvorrichtung ist eine Abzweigung 14 angeordnet, die zu einer Bypass-Absperrvorrichtung 15 führt. Durch Öffnung der Bypass-Absperrvorrichtung 15 wird ein Warmwasser-Bypassstrom freigegeben, der über die Verbindung 16 zum Bypassanschluss 8 strömt. Der Warmwasser-Bypassstrom strömt in die Mischkammer 6 der Armatur und spült den Mischwasserbereich der Armatur 1. Der Warmwasser-Bypassstrom kann so ungehindert bei geschlossenem Selbstschlussventil durch die Mischkammer 6 der Armatur 1 zum Auslauf 7 strömen.

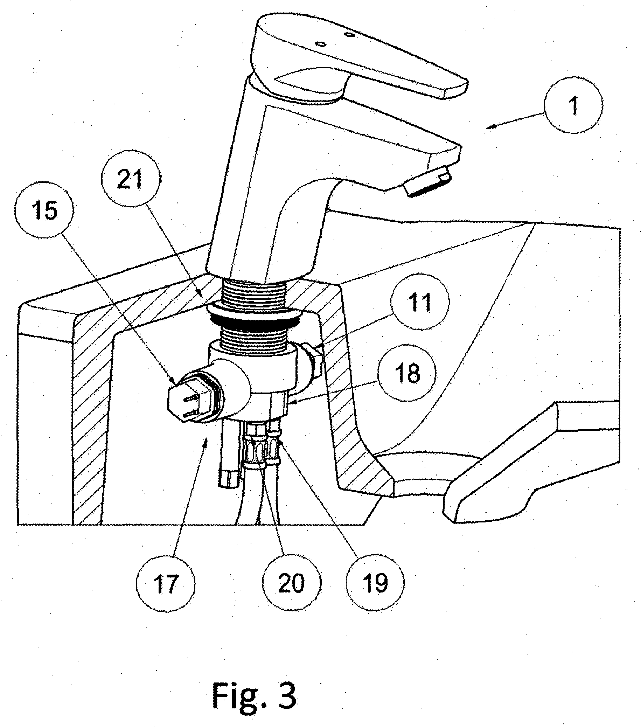

Figur 3 zeigt eine perspektivische Darstellung der Sanitäranordnung mit einer Armatur 1 als Einhebelmischer. Die Sanitäranordnung umfasst eine Baueinheit 17, die unterhalb der Armatur 1 angeordnet ist. In der Baueinheit 17 sind die beiden als Magnetventile ausgeführten Bypass-Absperrvorrichtungen 11, 15 integriert. Die Baueinheit 17 umfasst ein einstückiges Gehäuseteil 18, in dem die Bypass-Absperrvorrichtungen 11, 15 angeordnet sind. Die Baueinheit 17 weist einen Kaltwasserzulaufanschluss 19 und einen Warmwasserzulaufanschluss 20 auf. Zwischen der Baueinheit 17 und der Armatur 1 sind Verbindungselemente 21 angeordnet. Die Erfindung verringert den Montageaufwand, keine Schläuche zwischen Baueinheit 17 und Armatur 1 notwendig sind.

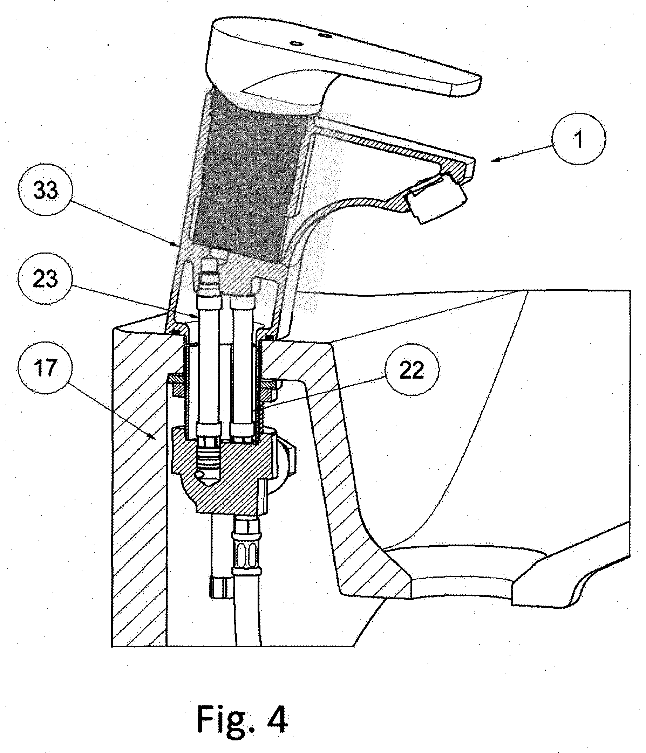

Die Schnittdarstellung der Sanitäranordnung gemäß Figur 4 zeigt, dass von der Baueinheit 17 Leitungen 22, 23 zum Anschluss 2 für Kaltwasser bzw. zum Anschluss 3 für Warmwasser der Armatur 1 führen.

Die Befestigung der Sanitärvorrichtung am Waschtisch 24 erfolgt über Verbindungselemente 21. Die Verbindungselemente 21 umfassen im Ausführungsbeispiel Gewindestangen und Armaturmuttern. Es wird ein Paket aus Baueinheit 17, Gewindehülse 30, Flachdichtungen, Waschtisch 24 und Armatur 1 miteinander verspannt. Bei allen Ausführungsvarianten wird eine Einlochbatterie eingesetzt, d. h. eine Armatur, deren Zuleitungen durch eine einzige Öffnung des Waschtischs 24 geführt werden. Bei den Armaturen 1 handelt es sich vorzugsweise um Standbatterien.

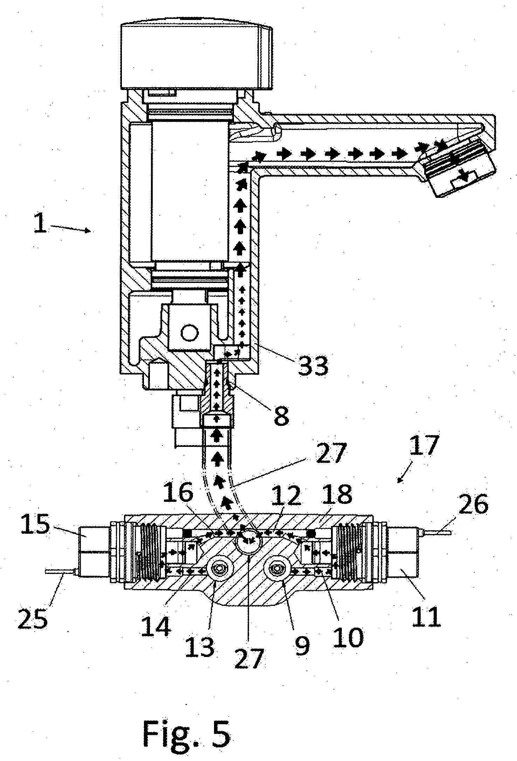

Figur 5 zeigt, dass es sich bei der Baueinheit 17 um ein eigenständiges Bauteil handelt, das ein Gehäuseteil 18 umfasst. Das Gehäuseteil 18 ist einstückig ausgeführt. Das Gehäuseteil 18 weist an einander gegenüberliegenden Seiten Öffnungen auf, die mit einem Innengewinde versehen sind. In das Innengewinde jeder Öffnung ist jeweils ein Magnetventil als Bypass-Absperrvorrichtung 11, 15 eingeschraubt. Dazu sind die Bypass-Absperrvorrichtungen 11, 15 mit einem Außengewinde versehen. Als Bypass-Absperrvorrichtungen 11, 15 werden im Ausführungsbeispiel Kartuschenventile eingesetzt. Jede Bypass-Absperrvorrichtung 11, 15 weist einen Empfänger 25, 26 auf, mit dem Signale eines Senders empfangen werden können, der von einer Steuereinrichtung (nicht dargestellt) angesteuert wird.

In der Baueinheit 17 verläuft ein Stück des Kaltwasserzulaufes 9 und des Warmwasserzulaufes 13. Die Abzweigung 10 vom Kaltwasserzulauf ist als Kanal ausgeführt, der im Gehäuseteil 18 der Baueinheit 17 eingebracht ist. Die Abzweigung 14 vom Warmwasserzulauf ist ebenfalls als Kanal ausgeführt, die im Gehäuseteil 18 der Baueinheit 17 eingebracht ist.

Zur Durchführung einer Hygienespülung mit Kaltwasser wird von einer (nicht dargestellten) Steuerung ein durch einen Zeitplan vorgegebenes Signal gesendet, das von dem Empfänger 26 empfangen wird. Die Bypass-Absperrvorrichtung 11 öffnet und es strömt Kaltwasser durch die Abzweigung 10 über die Verbindung 12 zu einer Spülleitung 27. Die Verbindung 12 zwischen Spülleitung 27 und Bypass-Absperrvorrichtung 11 ist ebenfalls als Kanal in dem Gehäuseteil 18 der Baueinheit 17 eingebracht. Die Spülleitung 27 führt zum Bypassanschluss 8 der Armatur 1.

Zur Durchführung einer Hygienespülung mit Warmwasser wird von einer (nicht dargestellten) Steuerung ein durch einen Zeitplan vorgegebenes Signal gesendet, das von dem Empfänger 25 empfangen wird.

Zur Durchführung einer Desinfektionsspülung mit warmem bzw. heißem Wasser wird ein in der Regel durch einen Benutzer manuell über eine Fernbedienung ausgelöstes Signal von einer Steuereinrichtung (nicht dargestellt) gesandt, das von dem Empfänger 25 empfangen wird.

Das Signal bewirkt ein Öffnen der Bypass-Absperrvorrichtung 15, wodurch warmes Wasser von der Abzweigung 14 über die Verbindung 16 zu der Spülleitung 27 strömt und über diese durch den Bypassanschluss 8 durch die Armatur 1. Die Verbindung 16 ist ebenfalls als Kanal im Gehäuseteil 18 der Baueinheit 17 eingebracht.

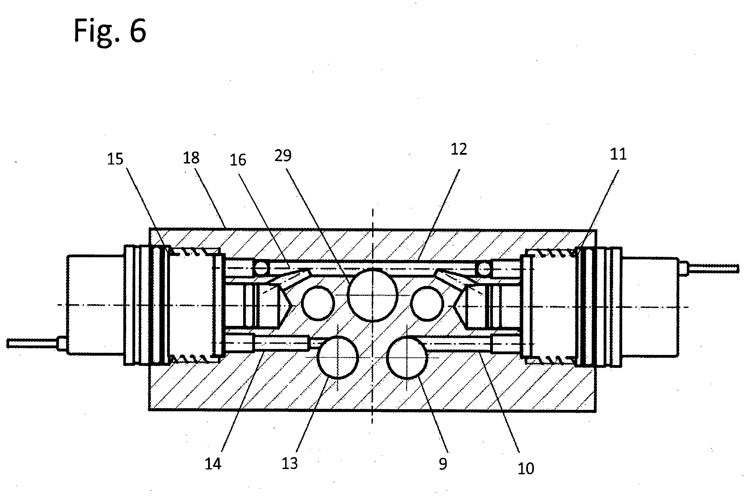

Figur 6 zeigt einen horizontalen Schnitt durch die Baueinheit 17. Nach den Bypass-Absperrvorrichtungen 11, 15 strömt der jeweilige Bypassstrom über Verbindungen 12, 16 zu einem Zulaufkanal 29 der zur Spülleitung 27 führt. Der Zulaufkanal 29 für die Spülleitung 27 ist im Gehäuseteil 18 der Baueinheit 17 integriert.

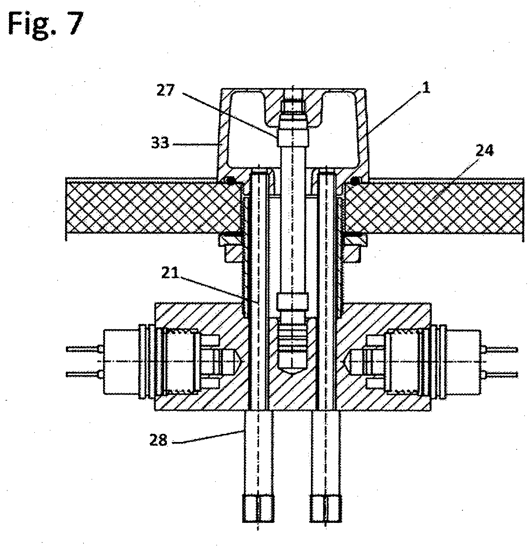

Der in Figur 7 dargestellte Vertikalschnitt zeigt die Befestigung von Baueinheit 17 und Armatur 1 an einem Waschtisch 24 von vorne gesehen. Über Verbindungselemente 21 sind die Baueinheit 17 und die Armatur 1 miteinander verbunden. Bei den Verbindungselementen 21 handelt es sich im Ausführungsbeispiel um Gewindestangen die mit Sechskantmuttern 28 für eine Standmontage versehen sind.

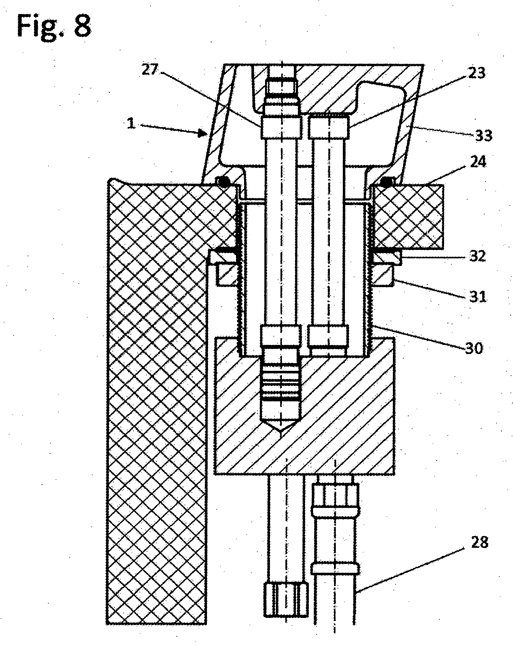

Figur 8 zeigt, dass in dem Loch des Waschtischs 24 eine Gewindehülse 30 angeordnet ist. Mittels eines Gewinderings 31 wird die Armatur 1 verspannt. Zwischen Gewindering 31 und Armatur 1 ist eine Unterlegscheibe 32 angeordnet. Der Gewindering 31 wird bei der Montage zunächst handfest noch oben gedreht zur Ausrichtung der als Standbatterie ausgeführten Armatur 1. Anschließend werden die Sechskantmuttern 28 festgeschraubt.

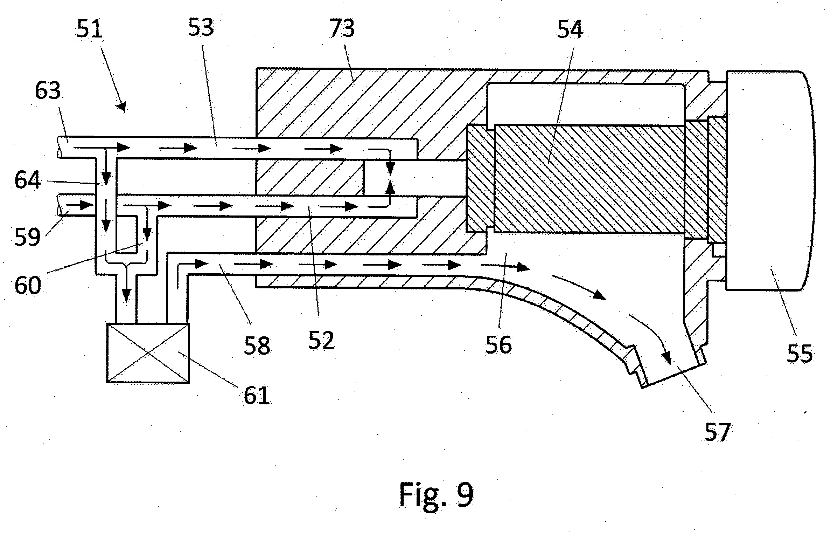

Figur 9 zeigt eine Variante der Erfindung mit einer Armatur 51, die Teil einer (nicht dargestellten) Reihenwaschanlage ist, wobei die Armatur wie schon bei der Ausführungsform gemäß Figur 2 als Selbstschlussarmatur ausgeführt ist mit einem Anschluss für Kaltwasser 52, einem Anschluss für Warmwasser 53, einer gemeinsamen Misch- und/oder Absperrvorrichtung 54 und einem Betätigungselement 55, das aus einem Drückkopf besteht. Unter Umgehung der Misch-und/oder Absperrvorrichtung 54 kann der Mischwasserbereich der Armatur 51 über eine Abzweigung 60 vom Kaltwässerzulauf 59 sowie über eine Abzweigung 64 vom Warmwasserzulauf 63, eine an Abzweigung 60 und Abzweigung 64 angeschlossene Bypass-Absperrvorrichtung 61 sowie einen der Bypass-Absperrvorrichtung 61 nachgeschalteten, in das Armaturengehäuse 73 integrierten Bypassanschluss 58 gespült werden.

Anders als bei der Ausführung gemäß den Figuren 1 und 2 weist die Armatur 51 nur eine Bypass-Absperrvorrichtung 61 auf, die sowohl an den Kaltwasserzulauf 59 als auch an den Warmwasserzulauf 63 angeschlossen ist, so dass durch Öffnen der Bypass-Absperrvorrichtung 61 zwar eine Hygienespülung mit Kalt- und Warmwasser, wegen des gleichzeitig geöffneten Kaltwasserzulaufs jedoch nicht mit etwaig zusätzlich aufgeheiztem Warmwasser eine thermische Desinfektionsspülung möglich ist.

Der Bypassstrom strömt über den Bypassanschluss 58 in die der Misch-und/oder Absperrvorrichtung 54 nachgeschaltete Mischkammer 56 der Armatur und spült den Mischwasserbereich der Armatur 1. Der Bypassstrom kann so ungehindert bei geschlossenem Selbstschlussventil, also bei geschlossener Misch-und/oder Absperrvorrichtung 54 durch die Mischkammer 56 der Armatur 51 zum Auslauf 57 strömen.

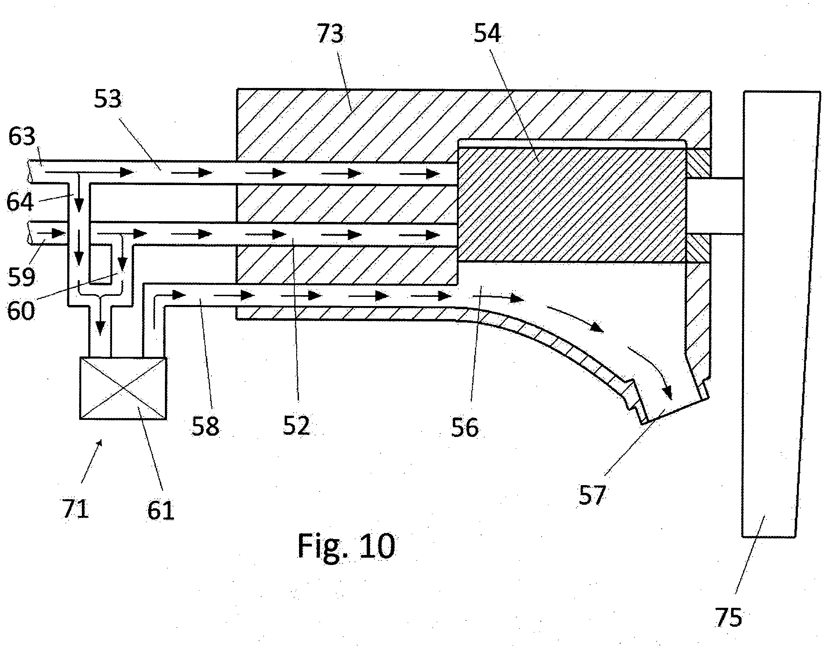

Figur 10 schließlich zeigt eine Armatur 71 einer Reihenwaschanlage, die ähnlich der Armatur 51 aus Figur 9 ausgebildet ist und bei der die gleichen Bereiche bzw. Bauteile mit denselben Bezugszeichen versehen sind. Der einzige Unterschied besteht nun darin, dass die Armatur nicht aus einer Selbstschlussarmatur, sondern aus einer Einhebelmischerarmatur mit einem Bedienhebel 75 besteht.

Es sei der Vollständigkeit halber darauf hingewiesen, dass es natürlich auch möglich ist, eine den Armaturen 51 oder 71 entsprechende Armatur für Reihenwaschanlagen mit einer Bypass-Absperrvorrichtung im Bereich des Kaltwasserzulaufs und mit einer weiteren Bypass-Absperrvorrichtung im Bereich des Kaltwasserzulaufs zu versehen.

Ebenso liegt es im Rahmen der vorliegenden Erfindung, jede der Armaturen mit einem (oder zwei) eigenen Bypassanschluss und einer (oder zwei) zugehörigen Bypass-Absperrvorrichtung zu versehen. Alternativ ist es bei einer Reihenwaschanlage aber auch möglich, z.B. im Leitungsstrang nur die letzte Armatur mit einem eigenen Bypassanschluss und einer zugehörigen Bypass-Absperrvorrichtung zu versehen und die strömungsaufwärts von der letzten Armatur positionierten Armaturen und Leitungsbereiche durch den Bypass der letzten Armatur zu spülen bzw. ggf. zu desinfizieren.

## Patentansprüche

1. Sanitäranordnung mit einer Armatur (1, 51, 71), die einen Anschluss (2, 52) für Kaltwasser, einen Anschluss (3, 53) für Warmwasser und einen Auslauf (7, 57) aufweist, wobei zwischen den Anschlüssen (2, 3, 52, 53) und dem Auslauf (7, 57) eine Misch- und/oder Absperrvorrichtung (4, 54) angeordnet ist und die Armatur einen Bypassanschluss (8, 58) für eine Spülung unter Umgehung der Misch- und/oder Absperrvorrichtung (4, 54) aufweist, wobei die Sanitäranordnung in mindestens einem Zulauf (9, 13, 59, 63) eine Abzweigung (10, 14, 60, 64) aufweist, die mit dem Bypassanschluss (8, 58) in Verbindung steht zur Freigabe einer Spülung mittels einer Bypass-Absperrvorrichtung (11, 15, 61),
wobei mindestens eine Bypass-Absperrvorrichtung (11, 15, 61) in eine Baueinheit (17) außerhalb der Armatur integriert ist,
**dadurch gekennzeichnet,**
**dass** eine Bypass-Absperrvorrichtung (15) für eine thermische Desinfektionsspülung mit Heißwasser und eine Bypass-Absperrvorrichtung (11) für eine Hygienespülung mit Kaltwasser gemeinsam in die Baueinheit (17) integriert sind.

2. Sanitäranordnung nach Anspruch 1,
**dadurch gekennzeichnet,**
**dass** mindestens eine Abzweigung (10, 14, 60, 64) in die Baueinheit (17) integriert ist.

3. Sanitäranordnung nach Anspruch 1 oder 2,
**dadurch gekennzeichnet,**
**dass** die Baueinheit (17) ein Gehäuseteil (18) aufweist, in das mindestens eine Bypass-Absperrvorrichtung (11, 15, 61) und/oder mindestens eine Abzweigung (10, 14, 60, 64) integriert ist.

4. Sanitäranordnung nach einem der Ansprüche 1 bis 3,
**dadurch gekennzeichnet,**
**dass** die Baueinheit (17) an der Armatur (1) über zumindest ein Verbindungselement (21) festgelegt ist zur insbesondere form-, kraft- oder reibschlüssigen gegenseitigen Festlegung von Baueinheit und Armatur und dass das Verbindungselement insbesondere aus einer zur Festlegung der Armatur dienenden Gewindestange oder einer Schnellspannvorrichtung besteht.

5. Sanitäranordnung nach einem der Ansprüche 1 bis 4,
**dadurch gekennzeichnet,**
**dass** die Verbindung zwischen Bypass-Absperrvorrichtung (11, 15) und Armatur (1) über eine direkte, insbesondere starre Verrohrung, insbesondere über einen zumindest abschnittsweise aus einem Rohrmaterial bestehenden Bypassanschluss (8) erfolgt.

6. Sanitäranordnung nach einem der Ansprüche 1 bis 5,
**dadurch gekennzeichnet,**
**dass** in einem Kaltwasserzulauf (9, 59) eine Abzweigung (10, 60) angeordnet ist, die mit dem Bypassanschluss (8, 58) in Verbindung steht zur Freigabe einer Spülung mittels einer Bypass-Absperrvorrichtung (11, 61).

7. Sanitäranordnung nach einem der Ansprüche 1 bis 6,
**dadurch gekennzeichnet,**
**dass** in einem Warmwasserzulauf (13, 63) eine Abzweigung (14, 64) angeordnet ist, die mit dem Bypassanschluss (8, 58) in Verbindung steht zur Freigabe einer Spülung mittels einer Bypass-Absperrvorrichtung (15, 61).

8. Sanitäranordnung nach Anspruch 6 und 7,
**dadurch gekennzeichnet,**
**dass** die Sanitäranordnung eine Spülleitung (27) aufweist, die am Bypassanschluss (8) angeschlossen ist und mit beiden Abzweigungen (10, 14) in Verbindung steht.

9. Sanitäranordnung nach einem der Ansprüche 1 bis 8,
**dadurch gekennzeichnet,**
**dass** die Baueinheit (17) einen Kaltwasserzulaufanschluss (19) und/oder einen Warmwasserzulaufanschluss (20) aufweist.

10. Sanitäranordnung nach einem der Ansprüche 1 bis 9,
**dadurch gekennzeichnet,**
**dass** die Baueinheit (17) beabstandet von der Armatur (1) und insbesondere unterhalb und/oder in der Nähe der Armatur angeordnet ist.

11. Sanitäranordnung nach einem der Ansprüche 1 bis 10,
**dadurch gekennzeichnet,**
**dass** die Sanitäranordnung mindestens ein Auslöseelement umfasst zur Freigabe einer Spülung, insbesondere zur thermischen Desinfektion.

12. Sanitäranordnung nach einem der Ansprüche 1 bis 11,
**dadurch gekennzeichnet,**
**dass** die Sanitäranordnung eine Einrichtung zur Steuerung einer Spülung aufweist, welche mindestens eine Bypass-Absperrvorrichtung (11, 15, 61) schaltet.

## Claims

1. Sanitary arrangement having a fitting (1, 51, 71) which has a port (2, 52) for cold water, a port (3, 53) for hot water and an outlet (7, 57), wherein a mixing and/or shut-off device (4, 54) is arranged between the ports (2, 3, 52, 53) and the outlet (7, 57), and the fitting has a bypass port (8, 58) for performing a flushing operation bypassing the mixing and/or shut-off device (4, 54), wherein the sanitary arrangement has, in at least one inlet (9, 13, 59, 63), a branch (10, 14, 60, 64) which communicates with the bypass port (8, 58) to enable flushing by means of a bypass shut-off device (11, 15, 61),
wherein at least one bypass shut-off device (11, 15, 61) is integrated into an assembly (17) outside the fitting,
**characterised in that**
a bypass shut-off device (15) for thermal disinfection flushing with hot water and a bypass shut-off device (11) for hygiene flushing with cold water are jointly integrated into the assembly (17).

2. Sanitary arrangement according to claim 1,
**characterised in that**
at least one branch (10, 14, 60, 64) is integrated into the assembly (17).

3. Sanitary arrangement according to claim 1 or 2,
**characterised in that**
the assembly (17) has a housing part (18) into which the at least one bypass shut-off device (11, 15, 61) and/or at least one branch (10, 14, 60, 64) is integrated.

4. Sanitary arrangement according to any one of claims 1 to 3,
**characterised in that**
the assembly (17) is secured on the fitting (1) by way of at least one connecting element (21), especially for securing the assembly and the fitting with respect to one another by interlocking, force-based or frictional engagement, and the connecting element consists especially of a threaded rod, which serves to secure the fitting, or a quick-release clamp.

5. Sanitary arrangement according to any one of claims 1 to 4,
**characterised in that**
the connection between the bypass shut-off device (11, 15) and the fitting (1) is effected by way of direct, especially rigid, piping, especially by way of a bypass port (8) which, at least in some portions, consists of a pipe material.

6. Sanitary arrangement according to any one of claims 1 to 5,
**characterised in that**
in a cold water inlet (9, 59) there is arranged a branch (10, 60) which communicates with the bypass port (8, 58) to enable flushing by means of a bypass shut-off device (11, 61).

7. Sanitary arrangement according to any one of claims 1 to 6,
**characterised in that**
in a hot water inlet (13, 63) there is arranged a branch (14, 64) which communicates with the bypass port (8, 58) to enable flushing by means of a bypass shut-off device (15, 61).

8. Sanitary arrangement according to claim 6 and 7,
**characterised in that**
the sanitary arrangement has a flushing line (27) which is connected to the bypass port (8) and communicates with both branches (10, 14).

9. Sanitary arrangement according to any one of claims 1 to 8,
**characterised in that**
the assembly (17) has a cold water inlet port (19) and/or a hot water inlet port (20).

10. Sanitary arrangement according to any one of claims 1 to 9,
**characterised in that**
the assembly (17) is arranged spaced apart from the fitting (1) and especially below and/or in the vicinity of the fitting.

11. Sanitary arrangement according to any one of claims 1 to 10,
**characterised in that**
the sanitary arrangement comprises at least one actuating element to enable flushing, especially for thermal disinfection.

12. Sanitary arrangement according to any one of claims 1 to 11,
**characterised in that**
the sanitary arrangement has a device for controlling flushing, which device operates at least one bypass shut-off device (11, 15, 61).

## Revendications

1. Ensemble sanitaire avec une robinetterie (1, 51, 71), présentant un raccord (2, 52) pour l'eau potable, un raccord (3, 53) pour l'eau chaude sanitaire et un écoulement (7, 57), sur lequel est disposé entre les raccords (2, 3, 52, 53) et l'écoulement (7, 57) un dispositif de mélange et/ou de retenue (4, 54), ladite robinetterie présentant un raccord de dérivation (8, 58) pour le rinçage avec contournement du dispositif de mélange et/ou de retenue (4, 54), l'ensemble sanitaire présentant dans au moins une conduite d'alimentation (9, 13, 59, 63) une dérivation (10, 14, 60, 64) raccordée au raccord de dérivation (8, 58) pour permettre un rinçage au moyen d'un dispositif de retenue de dérivation (11, 15, 61), au moins un dispositif de retenue ou de fermeture de dérivation (11, 15, 61) étant intégré dans une unité modulaire (17) en dehors de la robinetterie, **caractérisé en ce qu'**un dispositif de retenue de dérivation (15) pour rinçage de désinfection thermique avec eau chaude et un dispositif de retenue de dérivation (11) pour rinçage d'hygiène avec eau froide sont intégrés ensemble dans l'unité modulaire (17).

2. Ensemble sanitaire selon la revendication 1,
**caractérisé en ce que**
au moins une dérivation (10, 14, 60, 64) est intégrée dans l'unité modulaire (17).

3. Ensemble sanitaire selon la revendication 1 ou 2,
**caractérisé en ce que**
l'unité modulaire (17) présente un élément de boîtier (13) dans lequel est intégré au moins un dispositif de retenue de dérivation (11, 15, 61) et/ou au moins une dérivation (10,14, 60, 64).

4. Ensemble sanitaire selon l'une des revendications 1 à 3,
**caractérisé en ce que**,
l'unité modulaire (17) de la robinetterie (1) est fixée à l'aide d'au moins un élément de raccordement (21) pour permettre la fixation réciproque en particulier par complémentarité de forme, de force ou de friction de l'unité modulaire et de la robinetterie ; et **en ce que** l'élément de raccordement est composé notamment d'une tige filetée servant à la fixation de la robinetterie ou d'un dispositif de serrage rapide.

5. Ensemble sanitaire selon l'une des revendications 1 à 4,
**caractérisé en ce que**
le raccordement entre le dispositif de retenue de dérivation (11, 15) et la robinetterie (1) est effectué par une tuyauterie directe, notamment rigide, en particulier par un raccord de dérivation (8) composé au moins partiellement d'un matériau de tuyauterie.

6. Ensemble sanitaire selon l'une des revendications 1 à 5,
**caractérisé en ce que**
dans une alimentation en eau potable (9, 5, 9) est disposée une dérivation (10, 60), laquelle est connectée au raccord de dérivation (8, 58) pour le déblocage d'un rinçage à l'aide du dispositif de retenue de dérivation (11, 61).

7. Ensemble sanitaire selon l'une des revendications 1 à 6,
**caractérisé en ce que**
dans une alimentation en eau chaude sanitaire (13, 63) est disposée une dérivation (14, 64), laquelle est connectée au raccord de dérivation (8, 58) pour le déblocage d'un rinçage à l'aide du dispositif de retenue de dérivation (15, 61).

8. Ensemble sanitaire selon l'une des revendications 6 et 7,
**caractérisé en ce que**
l'ensemble sanitaire présente une conduite de rinçage (27) laquelle est raccordée au raccord de dérivation (8) et connectée aux deux bifurcations (10, 14).

9. Ensemble sanitaire selon l'une des revendications 1 à 8,
**caractérisé en ce que**
l'unité modulaire (17) présente un raccord d'alimentation en eau potable (19) et/ou un raccord d'alimentation en eau chaude sanitaire (20).

10. Ensemble sanitaire selon l'une des revendications 1 à 9,
**caractérisé en ce que**
l'unité modulaire (17) est agencée avec un écart par rapport à la robinetterie (1) et notamment sous et/ou à proximité de la robinetterie.

11. Ensemble sanitaire selon l'une des revendications 1 à 10,
**caractérisé en ce que**
l'ensemble sanitaire comprend au moins un élément de déclenchement pour le déclenchement d'un rinçage, en particulier pour la désinfection thermique.

12. Ensemble sanitaire selon l'une des revendications 1 à 11,
**caractérisé en ce que**
l'ensemble sanitaire présente un dispositif de commande de rinçage actionnant au moins un dispositif de retenue de dérivation (11, 15, 61).
